# EUROPEAN PATENT APPLICATION

(11) **EP 4 811 142 A1**
(43) Date of publication of application: **23.09.2026**
(21) Application number: 24899605.0
(22) Date of filing: 19.11.2024
(51) Int. Cl.: G06F 12/06

(54) **CACHE DATA REPLACEMENT METHOD AND RELATED DEVICE**

(30) Priority: 08.12.2023 CN 202311685153
(71) Applicant: Huawei Technologies Co., Ltd., Shenzhen, Guangdong 518129 (CN)
(72) Inventor: CUI, Yi, Shenzhen, Guangdong 518129 (CN); DI, Qianli, Shenzhen, Guangdong 518129 (CN); CHEN, Haiqiao, Shenzhen, Guangdong 518129 (CN); FENG, Huan, Shenzhen, Guangdong 518129 (CN); WU, Libo, Shenzhen, Guangdong 518129 (CN); MA, Haitao, Shenzhen, Guangdong 518129 (CN)
(74) Representative: MERH-IP Matias Erny Reichl Hoffmann Patentanwälte PartG mbB
(86) International application number: PCT/CN2024/132895
(87) International publication number: WO 2025/118963

(57) **Abstract**

Embodiments of this application disclose a cache data replacement method and a related device to determine a CL in which data is preferentially replaced. In this application, during the running of a second procedure, a second access request that is sent by a target application for second data is received. If a cache (cache) miss occurs for the second data, a plurality of CLs to be replaced in the cache are determined, where the plurality of CLs include a first CL. If the first CL among the plurality of CLs carries first hint state information corresponding to a first hint id and the first hint id in a second hint mapping table is mapped to a hint state of eviction, then first data in the first CL is replaced with the second data, and the second data is accessed from the first CL, where the first data is data accessed during a first procedure, a procedure preceding the second procedure in the target application.

## Description

This application claims priority to Chinese Patent Application No. 202311685153.X, filed with the China National Intellectual Property Administration on December 8, 2023 and entitled "CACHE DATA REPLACEMENT METHOD AND RELATED DEVICE", which is incorporated herein by reference in its entirety.

### TECHNICAL FIELD

This application relates to the field of data storage, and in particular, to a cache data replacement method and a related device.

### BACKGROUND

A cache (Cache) is a memory of a central processing unit (central processing unit, CPU). When accessing data, the CPU first checks whether the data is stored in the cache. If the data is stored in the cache, the CPU directly accesses the data from the cache. Otherwise, the CPU retrieves the data from another storage module and stores the data into the cache.

The smallest unit of data stored in the cache is a cache line (Cache line, CL). To be specific, the entire cache storage capacity is partitioned into a plurality of CLs of the same size (for example, 64 bytes), and a CL may be used as a whole for status maintenance and data loading. Due to limited cache capacity, when a piece of new data is to be stored in the cache, a case in which there is no idle CL in the cache usually occurs. In this case, a cache replacement algorithm is used to select a CL, evict data in the CL, and store the new data into the CL-a process referred to as CL data replacement. Existing cache replacement algorithms assign each CL a retention priority; when data replacement is needed, the CL with the lowest retention priority is chosen.

However, many applications execute in different phases, and data accessed in each phase is different. Based on the existing cache replacement algorithms, after a phase ends and the next phase starts, CLs holding frequently accessed data in the preceding phase retain high priorities, making them unlikely candidates for replacement. Consequently, CLs holding more frequently accessed data in the current phase are more prone to eviction, resulting in performance deterioration.

### SUMMARY

Embodiments of this application provide a cache data replacement method and a related device to determine a CL in which data is preferentially replaced.

According to a first aspect of this application, a cache data replacement method is provided. In this application, before a second procedure runs, a second hint mapping table is received, where the second hint mapping table includes a hint id and a mapped hint state, and the second procedure is a procedure of a target application. During the running of the second procedure, a second access request sent by the target application for the second data is received. If a cache (cache) miss occurs for the second data, a plurality of CLs to be replaced in the cache are determined, where the plurality of CLs include a first CL. If the first hint state information carried in the first CL among the plurality of CLs is a first hint id, and a mapped hint state of the first hint id in the second hint mapping table is eviction, first data in the first CL is replaced with the second data. The second data is accessed from the first CL, where the first data is data accessed by a first procedure, and the first procedure is a procedure preceding the second procedure in the target application.

In embodiments of this application, the second hint mapping table is written in the second procedure, so that the data is preferentially replaced in the first CL in which the first data that does not need to be accessed by the second procedure is located. Therefore, when a procedure of the target application changes and originally accessed data does not need to be accessed by the current procedure, the data can be evicted. This avoids a case in which the data is retained for a long time, and improves performance.

In some possible implementations, before the first procedure runs, a first replacement configuration is received, where the first replacement configuration includes a first address range and a first hint mapping table, the first hint mapping table includes the hint id and a mapped hint state, and in the first hint mapping table, a mapped hint state of the first hint id is collection. During the running of the first procedure, a first access request sent by the target application for the first data is received, and the first data is accessed from the first CL. If an address of the first data belongs to the first address range, the first hint state information is set to the first hint id. Therefore, the first CL in which the currently accessed first data is located is marked, to facilitate replacing the data in the first CL subsequently.

In some possible implementations, during the running of the first procedure, an access request sent by the target application for the shared data is received, and the shared data is accessed from the shared CL, where the shared data is data accessed by both the first procedure and the second procedure. If an address of the shared data does not belong to the first address range, shared hint state information carried in the shared CL is set to unconfigured. Therefore, the shared CL is not marked, and the first CL and the shared CL are distinguished.

In some possible implementations, a mapped hint state of a hint id other than the first hint id in the first hint mapping table is eviction. Therefore, only the first CL is currently marked.

In some possible implementations, a second replacement configuration is received, where the second replacement configuration includes the second hint mapping table, and the mapped hint state of the first hint id in the second hint mapping table is eviction. Therefore, the second hint mapping table is obtained.

In some possible implementations, the second replacement configuration further includes a second address range, a mapped hint state of a second hint id in the second hint mapping table is collection, after the second data is accessed from the first CL, if an address of the second data belongs to the second address range, the first hint state information carried in the first CL is set to the second hint id. Therefore, the second CL is marked while the data in the first CL is replaced.

In some possible implementations, the hint state information is carried in tag information of a CL in which the hint state information is located.

According to a second aspect of this application, a processor is provided. The processor is configured to perform the method according to any one of the first aspect.

According to a third aspect of this application, a computer-readable storage medium is provided. The computer-readable storage medium stores instructions, and when the instructions are run on a computer, the computer is enabled to perform the method according to the first aspect or any one of the possible implementations of the first aspect.

According to a fourth aspect of this application, a computer program product is provided. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, to enable the device to implement the method according to the first aspect or any one of the possible implementations of the first aspect.

According to fifth aspect of this application, a chip system is provided. The chip system includes a processor, configured to support implementation of a function according to the first aspect or any one of the possible implementations of the first aspect.

In a possible design, the chip system may further include a memory. The memory is configured to store necessary program instructions and data. The chip system may include a chip, or may include a chip and another discrete component.

For technical effect brought by the second aspect to the fifth aspect or any one of the possible implementations of the second aspect to the fifth aspect, refer to technical effect brought by the first aspect or the different possible implementations of the first aspect. Details are not described herein again.

### BRIEF DESCRIPTION OF DRAWINGS

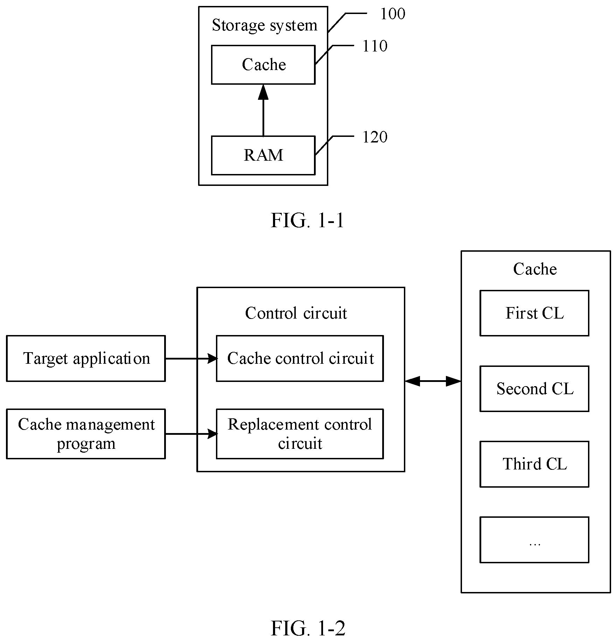

FIG. 1-1 is a diagram of a composition structure of a storage system according to an embodiment of this application;
FIG. 1-2 is a diagram of accessing data based on a storage system according to an embodiment of this application;
FIG. 2-1 is a schematic flowchart of a cache data replacement method according to an embodiment of this application;
FIG. 2-2 is another diagram of accessing data based on a storage system according to an embodiment of this application;

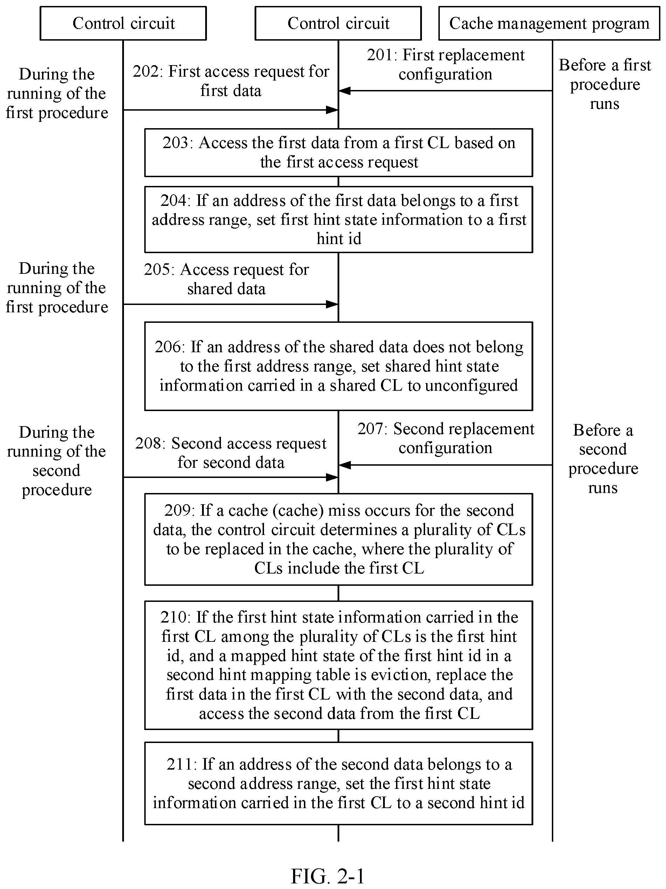

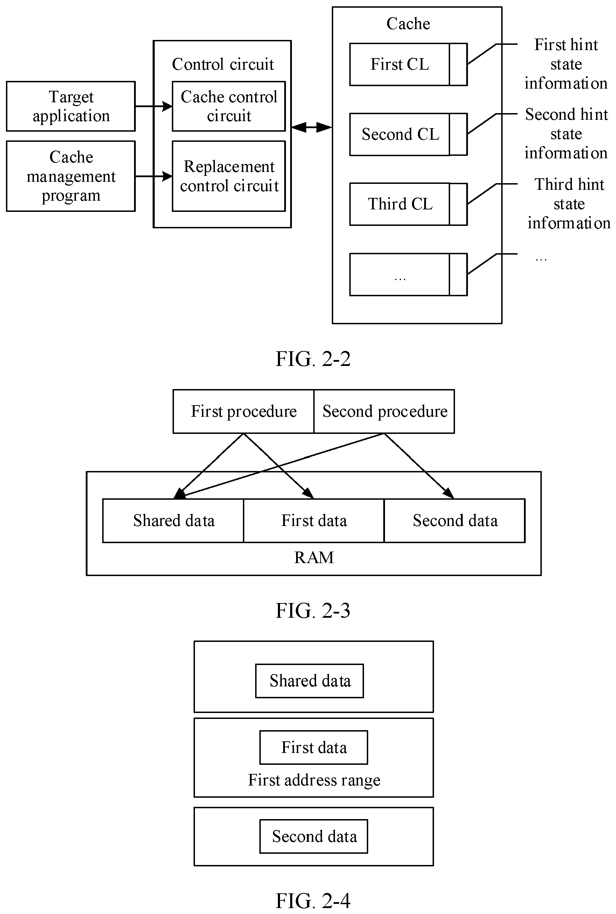

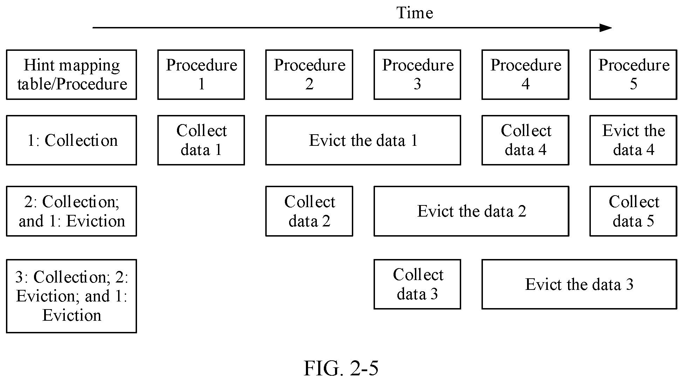

FIG. 2-3 is another diagram of accessing data based on a storage system according to an embodiment of this application;
FIG. 2-4 is a diagram of address arrangement of data according to an embodiment of this application;
FIG. 2-5 is a diagram of sequentially executing a plurality of procedures according to an embodiment of this application;

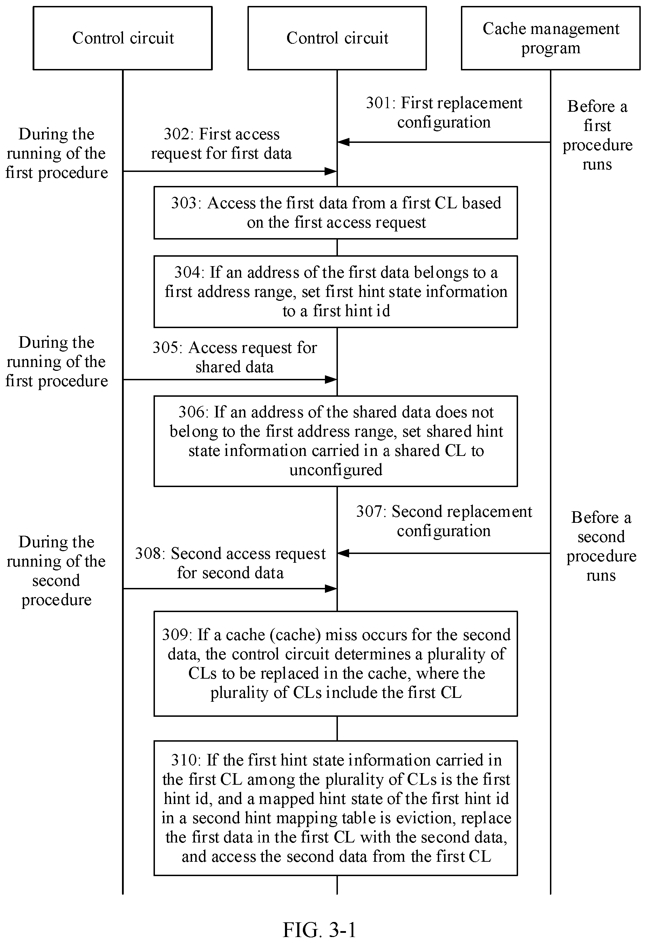

FIG. 3-1 is a schematic flowchart of a cache data replacement method according to an embodiment of this application;

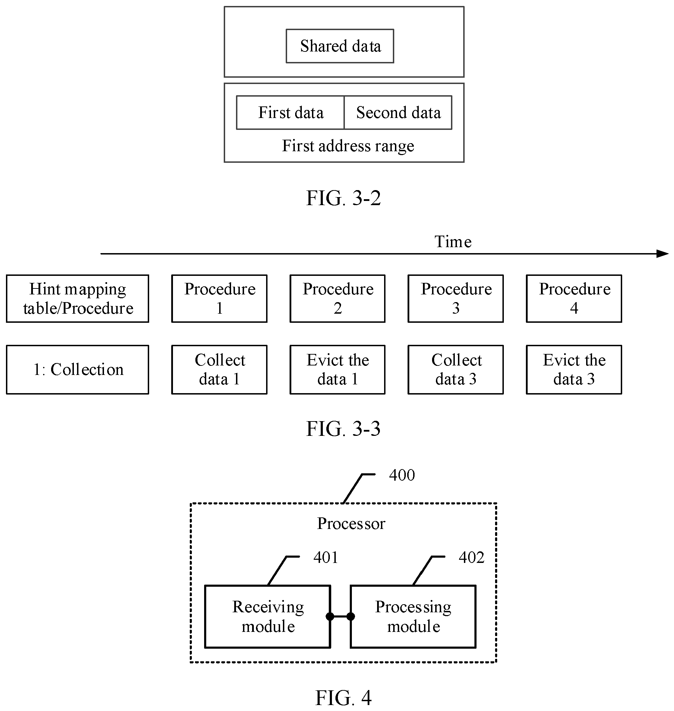

FIG. 3-2 is a diagram of address arrangement of data according to an embodiment of this application;
FIG. 3-3 is a diagram of sequentially executing a plurality of procedures according to an embodiment of this application; and
FIG. 4 is a diagram of a structure of a processor according to an embodiment of this application.

### DESCRIPTION OF EMBODIMENTS

Embodiments of this application provide a cache data replacement method and a related device to determine a CL in which data is preferentially replaced.

The following describes embodiments of this application with reference to accompanying drawings.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

This application may be applied to a storage system. FIG. 1-1 is a diagram of a structure of a storage system 100. As shown in FIG. 1-1, the storage system 100 includes a cache 110 and a RAM 120.

In some possible implementations, the storage system 100 may be used in a server, user equipment, or the like. This is not limited herein.

The server is a device that provides a computing service and/or a storage service. The server needs to respond to and process a service request to provide a reliable service. Therefore, generally, the server needs to be capable of undertaking and ensuring the service, and the server needs to have a strong processing capability, high stability, high reliability, high security, scalability, and manageability. In embodiments of this application, the server may be an x86 server. The x86 server is also referred to as a complex instruction set computer (complex instruction set computer, CISC) architecture server, which is commonly referred to as a personal computer (personal computer, PC) server. The x86 server is a server based on a PC system architecture and uses an Intel (Intel) chip or another processor chip compatible with an x86 instruction set and a Windows operating system.

The user equipment may be a terminal (terminal), a mobile station (mobile station, MS), a mobile terminal (mobile terminal, MT), or the like. The terminal may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the user equipment are not limited in embodiments of this application. The user equipment and the server may be directly or indirectly connected in a wired or wireless communication manner. This is not limited in this application.

In embodiments of this application, the cache 110 is part of a processor, and may be considered as an internal memory of the processor. The cache 110 can perform reading and writing at any time at a quite high speed, and usually serves as a temporary data storage medium for an operating system or another running program. Although the cache 110 improves a read/write speed of the storage system 100, the cache 110 is expensive and has a small capacity (usually tens of kilobytes (KB) to several megabytes (MB), which is far less than a capacity of the RAM or a hard disk).

In some possible implementations, the processor may be a single-core processor or a multi-core processor. This is not limited herein. In some possible implementations, the processor may be a general-purpose processor, for example, a central processing unit (Central Processing Unit, CPU), a graphics processing unit (graphics processing unit, GPU), a microprocessor, or a coprocessor. This is not limited herein. In some possible implementations, the processor may alternatively be a dedicated processor, for example, a digital signal processor (Digital Signal Processor, DSP), a neural network processing unit (neural processing unit, NPU), an application-specific integrated circuit (Application-Specific Integrated Circuit, ASIC), or a field programmable gate array (Field Programmable Gate Array, FPGA). This is not limited herein.

The RAM 120 is a memory outside the processor, and is configured to temporarily store operation data in the processor, and exchange data with another external storage. The RAM 120 is a bridge for communication between a hard disk and the processor, and all programs in a device run in the RAM 120. As long as the device starts to run, an operating system transfers, to the processor for calculation, data that needs to be calculated from the RAM 120. A capacity of the RAM 120 is far greater than that of the cache 110, and a data read speed of the RAM 120 is far higher than that of the hard disk. Generally, a solid state disk (Solid State Disk, SSD) is used as the RAM 120.

In the storage system 100, when a piece of data is accessed, it is first checked whether the data exists in the cache 110. If the data exists, the data is directly accessed from the cache 110. Otherwise, the data is obtained from the RAM 120 and stored in the cache 110. Based on this mechanism, as the storage system 110 runs, data may be gradually stored in the cache 110, so that the data can be accessed more quickly. This helps improve execution performance.

In some possible implementations, a multi-level cache mechanism exists between the cache 110 and the RAM 120, that is, there is a multi-level cache between the cache 110 and the RAM 120. "Obtaining the data from the RAM 120" includes obtaining the data from any level of the multi-level cache. If the data is not stored in any level of the multi-level cache between the cache 110 and the RAM 120, the data is obtained from the RAM 120.

The smallest unit of data stored in the cache is a CL. To be specific, the entire cache storage capacity is partitioned into a plurality of CLs of the same size (for example, 64 bytes), and a CL may be used as a whole for status maintenance and data loading. Due to limited cache capacity, when a piece of new data is to be stored in the cache, a case in which there is no idle CL in the cache usually occurs. In this case, a cache replacement algorithm is used to select a CL, evict data in the CL, and store the new data into the CL-a process referred to as CL data replacement. Existing cache replacement algorithms assign each CL a retention priority; when data replacement is needed, the CL with the lowest retention priority is chosen.

A design objective of the cache replacement algorithm is to identify or infer, as much as possible, data that is not frequently used in the future. Currently, mainstream cache replacement algorithms mainly include: 1. A first input first output (First Input First Output, FIFO) policy, used to evict data that is first written with e into the cache. 2. A least recently used (Least Recently Used, LRU) policy, used to evict data that is not accessed for longest time in the cache. 3. A least frequently used (least frequently used, LFU) policy, used to evict data that is accessed for a smallest quantity of times in the cache. 4. A re-reference interval prediction (Re-Reference Interval Prediction, RRIP) policy, used to maintain a re-reference prediction value (Re-reference Prediction Value, RRPV) for each CL, where the RRPV represents a predicted time interval for accessing the CL next time, and replacement is preferentially performed in a CL with a largest RRPV.

However, many applications execute in different phases, and data accessed in each phase is different. In the existing cache replacement algorithms, after a phase ends and the next phase starts, CLs holding frequently accessed data in the preceding phase retain high priorities, making them unlikely candidates for replacement. Consequently, CLs holding more frequently accessed data in the current phase are more prone to eviction, resulting in performance deterioration.

For example, a target application includes a first procedure and a second procedure. The first procedure starts earlier, and the second procedure starts after the first procedure ends. When the first procedure runs, first data and shared data need to be accessed. When the second procedure runs, second data and the shared data need to be accessed. After the first procedure ends and the second procedure runs, because the first data is no longer accessed, a better cache replacement policy should be selecting a CL corresponding to the first data and evicting the first data from the cache. However, the existing cache replacement algorithm cannot identify a change in an access habit. When the first procedure runs, as the first data is accessed, the cache replacement algorithm assigns a high retention priority to the CL in which the first data is located, and therefore the data in the CL is not easily replaced. After the second procedure runs, the retention priority for the first data is still generally higher than a retention priority for the shared data. Consequently, data in part of shared data is more likely to be replaced than that in the CL in which the first data is located, resulting in a cache failure in a case in which the shared data is subsequently accessed, and performance deterioration.

Therefore, this application provides the cache data replacement method and the related device to determine the CL in which data is preferentially replaced.

During the running of the second procedure, a second access request sent by the target application for the second data is received. If a cache (cache) miss occurs for the second data, a plurality of CLs to be replaced in the cache are determined, where the plurality of CLs include a first CL. If first hint state information carried in the first CL among the plurality of CLs is a first hint id, and a mapped hint state of the first hint id in a second hint mapping table is eviction, first data in the first CL is replaced with the second data. The second data is accessed from the first CL, where the first data is data accessed by the first procedure, and the first procedure is a procedure preceding the second procedure in the target application.

In embodiments of this application, the second hint mapping table is written in the second procedure, so that the data is preferentially replaced in the first CL in which the first data that does not need to be accessed by the second procedure is located. Therefore, when a procedure of the target application changes and originally accessed data does not need to be accessed by the current procedure, the data can be evicted. This avoids a case in which the data is retained for a long time, and improves performance.

In embodiments of this application, a configuration interface and a configuration storage module may be provided in a processor. In this case, a cache management program may configure, based on the configuration interface, a replacement configuration (for example, a first replacement configuration and a second replacement configuration) written into the storage module. In addition, a control circuit may be built in the processor. The control circuit may be configured to receive and process an access request for data in a CL, and may further execute a cache replacement algorithm. In some possible implementations, the control circuit may include a cache control circuit and a replacement control circuit. The cache control circuit is configured to receive and process an access request for data in a CL, and the replacement control circuit is configured to execute a cache replacement algorithm.

In some possible implementations, the cache management program may be a software entity running on the processor. For example, a program file of the storage management program may be stored in a hard disk, and the processor reads the program file from the hard disk, to run the cache management program. In some possible implementations, the cache management program may provide an interaction interface, and a user may perform an operation on the cache management program on the interaction interface, to implement the cache data replacement method. In some possible implementations, the cache management program may be an independent program on a device, and may obtain a running time period of the first procedure by interacting with the target application, to perform the cache data replacement method. In some possible implementations, the cache management program may alternatively be part of the target application, and the cache management program may be used as a function of the target application, to perform the cache data replacement method. This is not limited herein.

For example, as shown in FIG. 1-2, a control circuit includes a cache control circuit and a replacement control circuit. The cache control circuit is configured to receive an access request, for data, sent by a target application, and the replacement control circuit is configured to execute a cache replacement algorithm based on a replacement configuration (for example, a first replacement configuration or a second replacement configuration) written by a cache management program.

Refer to FIG. 2-1. A cache data replacement method provided in Embodiment 1 of this application mainly includes the following steps.

201: Before a first procedure runs, a cache management program writes a first replacement configuration into a control circuit, where the first replacement configuration includes a first address range and a first hint mapping table, and the first hint mapping table includes a hint id and a mapped hint state.

It should be noted that the first address range includes one or more address value intervals in a RAM, and the one or more address values may be consecutive or nonconsecutive. This is not limited herein.

It should be noted that as shown in FIG. 2-2, each CL may carry one piece of hint state information. A value of the hint state information may be unconfigured or a hint id, the hint id is used to determine a mapped hint state based on a replacement configuration, and a hint state may be collection or eviction. In a hint mapping table, if a mapped hint state of a hint id is collection, it indicates that a CL whose hint state information is the hint id is marked, and data needs to be replaced in the CL in a next procedure. In a hint mapping table, if a mapped hint state of a hint id is eviction, it indicates that data needs to be replaced in the current procedure in a CL whose hint state information is the hint id. If hint state information of a CL is unconfigured, no processing needs to be performed on the CL.

In some possible implementations, in the first hint mapping table, a mapped hint state of a first hint id is collection, and mapped hint states of hint ids other than the first hint id are all eviction.

For example, one or more hint ids include three hint ids: a first hint id, a second hint id, and a third hint id. For example, as shown in Table 1, the first hint id=1, the second hint id=2, and the third hint id=3. In the first hint mapping table, the mapped hint state of the first hint id of value 1 is collection, a mapped hint state of the second hint id of value 2 is eviction, and a mapped hint state of the third hint id of value 3 is eviction.

**Table 1**

| | Hint id | Hint state |
|---|---|---|
| First hint id | 1 | Collection |
| Second hint id | 2 | Eviction |
| Third hint id | 3 | Eviction |

In some possible implementations, in the first hint mapping table, at the same moment, at most one hint id is mapped to a hint state of collection, and the mapped hint states of other hint ids are all eviction. In some possible implementations, in the first hint mapping table, at the same moment, hint states corresponding to two or more hint ids may be collection, and hint states corresponding to other hint ids are all eviction. This is not limited herein. In some possible implementations, in the first hint mapping table, at the same moment, hint states corresponding to all hint ids may be eviction. This is not limited herein.

It should be noted that execution of a target application needs to be implemented by executing a plurality of procedures. The plurality of procedures include the first procedure and a second procedure. The first procedure is used to access first data and perform an operation to obtain a first operation result. The second procedure is used to access second data and perform an operation to obtain a second operation result. In some possible implementations, the first procedure may be a process, or may be an execution procedure of another type and/or the second procedure may be a process, or may be an execution procedure of another type. This is not limited herein.

In some possible implementations, the first data is part of data to be accessed by the first procedure, and the second data is part of data to be accessed by the second procedure. For example, the first procedure needs to access data 1a, data 1b, data 1c, and data d, and the first procedure needs to access data 2a, data 2b, data 2c, and the data d. The first data is the data 1a, the second data is the data 2a, and the shared data is the data d.

In some possible implementations, the second data may alternatively be part of data that needs to be accessed by the second procedure, instead of part of accessed data. This is not limited herein. In the following instance, an example in which the second data is part of data accessed by the second procedure is used for description.

In this embodiment of this application, after the first procedure ends, to evict the first data accessed only by the first procedure, and retain the shared data that needs to be accessed by both the first procedure and the second procedure, a first CL that stores the first data needs to be marked. Therefore, before the first procedure is executed, the first address range including an address of the first data needs to be first defined. Because the first replacement configuration includes the first address range in which the first data is located, when the first procedure accesses the first data, the address of the first data is obtained, and that the address of the first data belongs to the first address range is determined based on the first replacement configuration. Therefore, the first CL in which the first data is located can be marked based on the first hint mapping table, that is, first hint state information of the first CL is set to the first hint id, and the hint state of the first hint id in the first hint mapping table is collection.

In some possible implementations, the cache management program may obtain a running time period of the first procedure, and write the first replacement configuration into the control circuit before the first procedure runs. In some possible implementations, the cache management program may communicate with the target application, to obtain a procedure currently running in the target application and a procedure that is to run in the target application. This is not limited herein.

For example, as shown in FIG. 2-3, the target application includes the first procedure and the second procedure that are sequentially executed. When the first procedure runs, the first data and the shared data need to be accessed. When the second procedure runs, the second data and the shared data need to be accessed.

As shown in FIG. 2-3, before the first procedure runs, the cache management program may write the first replacement configuration into the control circuit. The first address range in the first replacement configuration includes the address of the first data, but does not include an address of the shared data. Therefore, the control circuit can mark the first CL in which the first data accessed by the first procedure is located, that is, set a value of the first hint state information of the first CL to the first hint id.

In some possible implementations, based on prior knowledge of software design of the target application, content of the shared data, the first data, and the second data is identified in advance in a writing phase of the software design or before the first procedure runs during software running, and the shared data, the first data, and the second data are arranged in different address ranges of a RAM. In some possible implementations, as shown in FIG. 2-4, the first address range includes the first data, but does not include the shared data or the second data. This is not limited herein.

202: During the running of the first procedure, the control circuit receives a first access request sent by the target application for the first data.

In some possible implementations, when the first procedure needs to access the first data during the running of the first procedure, the target application may send the first access request for the first data to the control circuit, where the first access request may carry an address of the first data in the RAM.

203: The control circuit accesses the first data from the first CL based on the first access request.

In some possible implementations, when the first procedure accesses the first data, a CL that stores the first data is first queried, from a cache based on the address, of the first data, indicated in the first access request. If the first CL stores the first data, the first procedure may access the first data from the first CL. In some possible implementations, if the first data is not stored in any CL, the first procedure may obtain the first data from the RAM, store the first data in the first CL, and then access the first data from the first CL. This is not limited herein.

For example, a process in which the first procedure accesses the first data may be shown in the following steps S1 to S7.

S1: The control circuit traverses each CL in the cache, to determine whether there is a CL that stores the first data.

For example, the cache includes the first CL, a second CL, and a third CL. The control circuit traverses the first CL, the second CL, and the third CL, to determine whether the first data is stored in the first CL, the second CL, or the third CL.

S2: If the first data is stored in the first CL in the cache, the control circuit accesses the first data from the first CL.

S3: If the first data is not stored in any CL in the cache, the control circuit obtains the first data from the RAM.

S4: If there is an idle first CL in the cache, the control circuit stores the first data in the first CL, and accesses the first data from the first CL.

S5: If there is no idle CL in the cache, the control circuit determines, based on a current cache replacement algorithm, a plurality of CLs to be replaced.

S6: If the first CL among the plurality of CLs carries the first hint state information, a value of the first hint state information is a second hint id, and a mapped hint state of the second hint id in the first hint mapping table is eviction, the control circuit replaces data in the first CL with the first data.

S7: The control circuit updates retention priorities of the plurality of CLs.

204: If the address of the first data belongs to the first address range, the control circuit sets the first hint state information to the first hint id.

In some possible implementations, each CL in a cache carries corresponding tag information, and the tag information further includes hint state information of the CL. This is not limited herein.

In some possible implementations, a value of hint state information carried in a CL may be a hint id or unconfigured, the hint id is used to determine a mapped hint state based on a hint mapping table, and a hint state is collection or eviction. For example, when the first data is accessed from the first CL, the control circuit determines that the address of the first data in the first CL belongs to the first address range, and the control circuit sets the first hint state information carried in the first CL to the first hint id, where the first hint id is a hint id whose mapped hint state is collection in the first hint mapping table, so that the first CL is marked.

It should be noted that the control circuit needs to set the first hint state information carried in the first CL to be the hint id whose mapped hint state is collection in the first hint mapping table, and therefore the control circuit also needs to determine that the hint id whose mapped hint state is collection exists in the first hint mapping table.

For example, during the running of the first procedure, the value of the first hint state information carried in the first CL is 2, namely, the second hint id, and the mapped hint state in the first hint mapping table is eviction. Because the address of the first data belongs to the first address range, and the mapped hint state of the first hint id in the first hint mapping table is collection, the control circuit may set the first hint state information carried in the first CL to be 1, namely, the first hint id, where the mapped hint state of the first hint id in the first hint mapping table is collection, so that the first CL is marked, that is, the first data that needs to be evicted in a next procedure and is in the first CL is collected.

205: During the running of the first procedure, the control circuit receives an access request sent by the target application for the shared data, and accesses the shared data from a shared CL, where the shared data is data accessed by both the first procedure and the second procedure.

In some possible implementations, when the first procedure accesses the shared data, a CL that stores the shared data is first queried from the cache. If the shared CL stores the shared data, the first procedure may access the shared data from the shared CL. In some possible implementations, if the shared data is not stored in any CL, the first procedure may obtain the shared data from the RAM, store the shared data in the shared CL, and then access the shared data from the shared CL. This is not limited herein.

206: If an address of the shared data does not belong to the first address range, the control circuit sets shared hint state information carried in the shared CL to unconfigured.

In some possible implementations, when the first procedure accesses, from a CL, other data whose address does not belong to the first address range, hint state information of the CL may be set to unconfigured. For example, when the first procedure accesses the shared data from the shared CL, and the shared data that is stored in the shared CL and whose address does not belong to the first address range, the control circuit sets shared hint state information corresponding to the shared CL to be 0, namely, be unconfigured.

207: Before the second procedure runs, the cache management program writes a second replacement configuration into the control circuit, where the second replacement configuration includes a second address range and a second hint mapping table, and the second hint mapping table includes the hint id and a mapped hint state.

In this embodiment of this application, the cache management program may first obtain a running time period of the second procedure, and write the second replacement configuration into the control circuit before the second procedure runs.

In some possible implementations, the second procedure may run immediately after the first procedure ends. In some possible implementations, before the second procedure runs, the cache management program may modify the first replacement configuration to the second replacement configuration. The second replacement configuration includes the second hint mapping table. Compared with those in the first hint mapping table, a mapped hint state of the first hint id in the second hint mapping table is eviction, and a mapped hint state of the second hint id in the second hint mapping table is collection. Therefore, a hint state corresponding to the first CL is eviction, and the control circuit can quickly replace the data in the first CL when the second procedure runs.

In some possible implementations, in the second hint mapping table, the mapped hint state of the second hint id is collection, and mapped hint states of hint ids other than the second hint id are all eviction.

For example, the second hint mapping table is shown in Table 2, the first hint id=1, the second hint id=2, and the third hint id=3. In the second mapping table, the mapped hint state of the first hint id of value 1 is eviction, the mapped hint state of the second hint id of value 2 is collection, and a mapped hint state of the third hint id of value 3 is eviction. The value of the first hint state information carried in the first CL is 1, the mapped hint state in the first hint mapping table is collection, and the mapped hint state in the second hint mapping table is changed to eviction.

**Table 2**

| | Hint id | Hint state |
|---|---|---|
| First hint id | 1 | Eviction |
| Second hint id | 2 | Collection |
| Third hint id | 3 | Eviction |

In some possible implementations, in the second hint mapping table, at the same moment, at most one hint id is mapped to a hint state of collection, and the mapped hint states of other hint ids are all eviction. In some possible implementations, in the second hint mapping table, at the same moment, hint states corresponding to two or more hint ids may be collection, and hint states corresponding to other hint ids are all eviction. This is not limited herein.

In this embodiment of this application, after the second procedure ends, to evict the second data accessed only by the second procedure, and retain the shared data that needs to be accessed by both the first procedure and the second procedure, a CL that stores the second data needs to be marked. Therefore, before the second procedure is executed, the second address range including the second data needs to be first defined. Because the second replacement configuration includes the second address range in which the second data is located, when the second procedure accesses the second data, an address of the second data is obtained, and that the address of the second data belongs to the second address range is determined based on the second replacement configuration. Therefore, the CL in which the second data is located can be marked based on the second hint mapping table, that is, hint state information of the CL in which the second data is located is set to the second hint id, and the hint state of the second hint id in the second hint mapping table is collection.

Therefore, in some possible implementations, the second replacement configuration further includes the second address range, to replace the first address range. The second data belongs to the second address range, and the mapped hint state of the second hint id (of value 2) in the second hint mapping table is collection. When the second procedure runs, and the second procedure accesses the second data, the control circuit may mark the CL in which the second data is located, and preferentially replace the second data in the CL after the second procedure ends. It should be noted that the second address range includes one or more address value intervals in the RAM, and the one or more address values may be consecutive or nonconsecutive. This is not limited herein.

208: During the running of the second procedure, the control circuit receives a second access request sent by the target application for the second data.

In some possible implementations, when the second procedure accesses the second data, a CL that stores the second data is first queried from the cache. If the second CL stores the second data, the second procedure may access the second data from the second CL. In some possible implementations, if the second data is not stored in any CL, step 209 is performed.

209: If a cache (cache) miss occurs for the second data, the control circuit determines a plurality of CLs to be replaced in the cache, where the plurality of CLs include the first CL.

It should be noted that during the running of the second procedure, the plurality of CLs to be replaced may be determined by executing any cache replacement algorithm. For example, the plurality of CLs include a first CL, a second CL, and a third CL. It is determined, based on the current cache replacement algorithm, that the first CL, the second CL, and the third CL are CLs having low retention priorities.

210: If the first hint state information carried in the first CL among the plurality of CLs is the first hint id, and the mapped hint state of the first hint id in the second hint mapping table is eviction, then the control circuit replaces the first data in the first CL with the second data and accesses the second data in the first CL.

In some possible implementations, the control circuit may traverse each of the plurality of CLs to be replaced, obtain hint state information corresponding to each CL, obtain a mapped hint state from the second hint mapping table based on the hint state information, and replace data in a CL whose hint state is eviction.

For example, before the second procedure runs, the first hint state information of the first CL is the first hint id (for example, a value is 1), and based on the first hint mapping table, the mapped hint state of the first hint id is collection. During the running of the second procedure, based on the second hint mapping table, the mapped hint state of the first hint id (for example, the value is 1) is eviction. Therefore, the control circuit can preferentially replace data in the first CL during the running of the second procedure.

In addition, if the plurality of CLs include the shared CL in which the shared data is located, before the second procedure runs, the shared hint state information of the shared CL is unconfigured (the value of the shared hint state information is 0). During the running of the second procedure, the shared hint state information of the shared CL is still unconfigured (the value of the shared hint state information is 0). Therefore, during the running of the second procedure, the shared data is not preferentially replaced. The first data in the first CL is replaced, and the shared data is retained. No cache failure occurs when the shared data is subsequently accessed, thereby avoiding performance deterioration.

211: If the address of the second data belongs to the second address range, the control circuit sets the first hint state information carried in the first CL to the second hint id.

In some possible implementations, the second replacement configuration further includes the second address range, and the second address range includes the address of the second data but does not include the address of the shared data. The control circuit may mark the first CL in which the second data accessed by the second procedure is located. Subsequently, after the second procedure ends, the second data may be preferentially evicted, that is, the data in the first CL is replaced.

In some possible implementations, when the second procedure accesses the second data, a CL that stores the second data is first queried from the cache. If the first CL stores the second data, the second procedure may access the second data from the first CL. In some possible implementations, if the first data is not stored in any CL, the second procedure may obtain the second data from the RAM, store the second data in the first CL, and then access the second data from the first CL. This is not limited herein.

In some possible implementations, when the second data is accessed from the first CL, if the control circuit determines that the address of the second data belongs to the second address range, the control circuit sets the first hint state information carried in the first CL to be a hint id, namely, the second hint id (for example, a value is 2), whose mapped hint state is collection in the second hint mapping table, so that the first CL is marked.

For example, the value of the first hint state information carried in the first CL is 1, that is, the hint state corresponding to the first hint state information is eviction. When the second data is accessed from the first CL, the control circuit determines that the address of the second data in the first CL belongs to the second address range, and the mapped hint state of the second hint id in the second hint mapping table is collection. The control circuit sets the first hint state information carried in the first CL to be 2, namely, the second hint id, where the mapped hint state of the second hint id in the second hint mapping table is collection, so that the first CL is marked, and after the second procedure ends, the data in the first CL can be preferentially replaced, that is, the second data in the first CL is preferentially evicted.

In some possible implementations, when the second procedure accesses, from a CL, other data that does not belong to the second address range, hint state information of the CL may be set to unconfigured. For example, when the second procedure accesses the shared data from the shared CL, and the shared data stored in the shared CL does not belong to the second address range, the control circuit sets shared hint state information corresponding to the shared CL to be 0, namely, be unconfigured.

Based on the foregoing steps 201 to 211, different mapped hint states of several hint ids may be reused to obtain different hint mapping tables and corresponding replacement configurations, and different replacement configurations further include different address ranges. Different replacement configurations are used in different procedures, so that different CLs can be marked or data in different CLs can be replaced in different procedures. The following provides descriptions by using an example.

For example, as shown in FIG. 2-5, a target application includes a plurality of procedures, and the plurality of procedures include a procedure 1, a procedure 2, a procedure 3, a procedure 4, and a procedure 5 that sequentially run. The procedure 1 needs to access data 1 and shared data, the procedure 2 needs to access data 2 and the shared data, the procedure 3 needs to access data 3 and the shared data, the procedure 4 needs to access data 4 and the shared data, and the procedure 5 needs to access data 5 and the shared data.

Before the procedure 1 runs, a cache management program writes a replacement configuration 1 into a control circuit, where the replacement configuration 1 includes an address range 1 and a hint mapping table 1. The address range 1 includes an address of the data 1 but does not include an address of the shared data. The hint mapping table 1 is shown in Table 1.

During the running of the procedure 1, when the data 1 is accessed from a CL 1, the address of the data 1 in the CL 1 belongs to the address range 1, and a mapped hint state of a first hint id in the hint mapping table 1 is collection. Therefore, a value of hint state information 1 carried in the CL 1 may be set to be 1, namely, the first hint id. However, the address of the shared data is not in the address range 1, and therefore no processing is performed in a shared CL in which the shared data is located. A value of shared hint state information of the shared CL is still 0, that is, a corresponding hint state is unconfigured. Therefore, the control circuit marks the CL 1, but does not mark the shared CL.

After the procedure 1 ends and before the procedure 2 runs, the cache management program writes a replacement configuration 2 into the control circuit, to replace the replacement configuration 1. The replacement configuration 2 includes an address range 2 and a hint mapping table 2. The address range 2 includes an address of the data 2 but does not include the address of the shared data. The hint mapping table 2 is shown in Table 2.

During the running of the procedure 2, when a plurality of CLs to be replaced are determined, the plurality of CLs to be replaced include the CL 1 and the shared CL. The value of the hint state information 1 carried in the CL 1 is 1, namely, the first hint id, and a mapped hint state in the hint mapping table 2 is eviction. The value of the shared hint state information of the shared CL is 0, that is, the corresponding hint state is unconfigured. Therefore, the control circuit can preferentially replace the data in the CL 1 instead of preferentially replace the data in the shared CL.

In addition, during the running of the procedure 2, when the data 2 is accessed from a CL 2, the address of the data 2 in the CL 2 belongs to the address range 2, and a mapped hint state of a second hint id in the hint mapping table 2 is collection. Therefore, a value of hint state information 2 carried in the CL 2 may be set to be 2, namely, the second hint id. However, the address of the shared data is not in the address range 2, and therefore no processing is performed in the shared CL in which the shared data is located. The value of the shared hint state information of the shared CL is still 0, that is, the corresponding hint state is unconfigured. Therefore, the control circuit marks the CL 2, but does not mark the shared CL.

After the procedure 2 ends and before the procedure 3 runs, the cache management program writes a replacement configuration 3 into the control circuit, to replace the replacement configuration 2. The replacement configuration 3 includes an address range 3 and a hint mapping table 3. The address range 3 includes an address of the data 3 but does not include the address of the shared data. The hint mapping table 3 is shown in Table 3.

**Table 3**

| | Hint id | Hint state |
|---|---|---|
| First hint id | 1 | Eviction |
| Second hint id | 2 | Eviction |
| Third hint id | 3 | Collection |

During the running of the procedure 3, when a plurality of CLs to be replaced are determined, the plurality of CLs to be replaced include the CL 1, the CL 2, and the shared CL. The value of the hint state information 2 carried in the CL 2 is 2, namely, the second hint id, and a mapped hint state in the hint mapping table 3 is eviction. The value of the hint state information 1 carried in the CL 1 is 1, namely, the first hint id, and a mapped hint state in the hint mapping table 3 is eviction. The value of the shared hint state information of the shared CL is 0, that is, the corresponding hint state is unconfigured. Therefore, the control circuit can preferentially replace the data in the CL 1 and the CL 2 instead of preferentially replace the data in the shared CL.

In addition, during the running of the procedure 3, when the data 3 is accessed from a CL 3, the address of the data 3 in the CL 3 belongs to the address range 3, and a mapped hint state of the third hint id in the hint mapping table 3 is collection. Therefore, a value of hint state information 3 carried in the CL 3 may be set to be 3, namely, the third hint id. However, the address of the shared data is not in the address range 3, and therefore no processing is performed in the shared CL in which the shared data is located. The value of the shared hint state information of the shared CL is still 0, that is, the corresponding hint state is unconfigured. Therefore, the control circuit marks the CL 3, but does not mark the shared CL.

After the procedure 3 ends and before the procedure 4 runs, the cache management program writes a replacement configuration 4 into the control circuit, to replace the replacement configuration 3. The replacement configuration 4 includes an address range 4 and a hint mapping table 4. The address range 4 includes an address of the data 4 but does not include the address of the shared data. The hint mapping table 4 is shown in Table 4.

**Table 4**

| Hint id | Hint state | |
|---|---|---|
| First hint id | 1 | Collection |
| Second hint id | 2 | Eviction |
| Third hint id | 3 | Eviction |

During the running of the procedure 4, when a plurality of CLs to be replaced are determined, the plurality of CLs to be replaced include the CL 2, the CL 3, and the shared CL. The value of the hint state information 2 carried in the CL 2 is 2, namely, the second hint id, and a mapped hint state in the hint mapping table 4 is eviction. The value of the hint state information 3 carried in the CL 3 is 3, namely, the third hint id, and a mapped hint state in the hint mapping table 4 is eviction. The value of the shared hint state information of the shared CL is 0, that is, the corresponding hint state is unconfigured. Therefore, the control circuit can preferentially replace the data in the CL 2 and the CL 3 instead of preferentially replace the data in the shared CL.

It should be noted that although the value of the hint state information 1 carried in the CL 1 is still 1, namely, the first hint id, and a mapped hint state in the hint mapping table 4 is collection, because the data in the CL 1 has been replaced, and the data in the CL 1 is not data that needs to be accessed by the procedure 4, the data 1 may not be accessed from the CL 1, that is, the CL 1 may not be marked.

In addition, during the running of the procedure 4, when the data 4 is accessed from a CL 4, the address of the data 4 in the CL 4 belongs to the address range 4, and a mapped hint state of the first hint id in the hint mapping table 4 is collection. Therefore, a value of hint state information 4 carried in the CL 4 may be set to be 1, namely, the first hint id. However, the address of the shared data is not in the address range 4, and therefore no processing is performed in the shared CL in which the shared data is located. The value of the shared hint state information of the shared CL is still 0, that is, the corresponding hint state is unconfigured. Therefore, the control circuit marks the CL 4, but does not mark the shared CL.

After the procedure 4 ends and before the procedure 5 runs, the cache management program writes a replacement configuration 5 into the control circuit, to replace the replacement configuration 4. The replacement configuration 5 includes an address range 5 and a hint mapping table 5. The address range 5 includes an address of the data 5 but does not include the address of the shared data. The hint mapping table 5 is shown in Table 5.

**Table 5**

| | Hint id | Hint state |
|---|---|---|
| First hint id | 1 | Eviction |
| Second hint id | 2 | Collection |
| Third hint id | 3 | Eviction |

During the running of the procedure 5, when a plurality of CLs to be replaced are determined, the plurality of CLs to be replaced include the CL 3, the CL 4, and the shared CL. The value of the hint state information 3 carried in the CL 3 is 3, namely, the third hint id, and a mapped hint state in the hint mapping table 5 is eviction. The value of the hint state information 4 carried in the CL 4 is 1, namely, the first hint id, and a mapped hint state in the hint mapping table 5 is eviction. The value of the shared hint state information of the shared CL is 0, that is, the corresponding hint state is unconfigured. Therefore, the control circuit can preferentially replace the data in the CL 3 and the CL 4 instead of preferentially replace the data in the shared CL.

It should be noted that although the value of the hint state information 2 carried in the CL 2 is still 2, namely, the second hint id, and a mapped hint state in the hint mapping table 5 is collection, because the data in the CL 2 has been replaced, and the data in the CL 2 is not data that needs to be accessed by the procedure 5, the data 2 may not be accessed from the CL 2, that is, the CL 2 may not be marked.

In addition, during the running of the procedure 5, when the data 5 is accessed from a CL 5, the address of the data 5 in the CL 5 belongs to the address range 5, and a mapped hint state of the second hint id in the hint mapping table 5 is collection. Therefore, a value of hint state information 5 carried in the CL 5 may be set to be 2, namely, the second hint id. However, the address of the shared data is not in the address range 5, and therefore no processing is performed in the shared CL in which the shared data is located. The value of the shared hint state information of the shared CL is still 0, that is, the corresponding hint state is unconfigured. Therefore, the control circuit marks the CL 5, but does not mark the shared CL.

By using different replacement configurations in different procedures, several hint ids are reused to mark different CLs and replace data in the different CLs in the different procedures, so that data, in a CL in which data accessed by a previous procedure is located is preferentially replaced in the current procedure, and the shared data that needs to be continuously accessed by the current procedure may continue to retain in a cache.

In this application, during the running of the second procedure, the second access request sent by the target application for the second data is received, where the second data is the data accessed by the second procedure. If a cache (cache) miss occurs for the second data, the plurality of CLs to be replaced in the cache are determined, where the plurality of CLs include the first CL. If the first hint state information carried in the first CL among the plurality of CLs is the first hint id, and the mapped hint state of the first hint id in the second hint mapping table is eviction, the first data in the first CL is replaced with the second data. The second data is accessed from the first CL, where the first data is the data accessed by the first procedure, and the first procedure is the procedure preceding the second procedure in the target application.

In embodiments of this application, the second hint mapping table is written in the second procedure, so that the data is preferentially replaced in the first CL in which the first data that does not need to be accessed by the second procedure is located. Therefore, when a procedure of the target application changes and originally accessed data does not need to be accessed by the current procedure, the data can be evicted. This avoids a case in which the data is retained for a long time, and improves performance.

In Embodiment 1, there may be a plurality of hint ids in one hint mapping table. In some possible implementations, there may be only one hint id in one hint mapping table, and a mapped hint state of the hint id is collection or eviction. For example, refer to the following Embodiment 2.

Refer to FIG. 3-1. A cache data replacement method provided in Embodiment 2 of this application mainly includes the following steps.

301: Before a first procedure runs, a cache management program writes a first replacement configuration into a control circuit, where the first replacement configuration includes a first address range and a first hint mapping table, and the first hint mapping table includes a hint id and a mapped hint state.

It should be noted that the first address range includes one or more address value intervals in a RAM, and the one or more address values may be consecutive or nonconsecutive. This is not limited herein.

It should be noted that as shown in FIG. 2-2, each CL may carry one piece of hint state information. A value of the hint state information may be unconfigured or a hint id, the hint id is used to determine a mapped hint state based on a replacement configuration, and a hint state may be collection or eviction. In a hint mapping table, if a mapped hint state of a hint id is collection, it indicates that a CL whose hint state information is the hint id is marked, and data needs to be replaced in the CL in a next procedure. In a hint mapping table, if a mapped hint state of a hint id is eviction, it indicates that data needs to be replaced in the current procedure in a CL whose hint state information is the hint id. If hint state information of a CL is unconfigured, no processing needs to be performed on the CL.

In some possible implementations, in the first hint mapping table, a mapped hint state of a first hint id is collection, and mapped hint states of hint ids other than the first hint id are all eviction.

For example, one or more hint ids include one hint id, namely, the first hint id. For example, as shown in Table 6, the first hint id=1. In the first hint mapping table, a mapped hint state of the first hint id of value 1 is collection.

**Table 6**

| | Hint id | Hint state |
|---|---|---|
| First hint id | 1 | Collection |

It should be noted that execution of a target application needs to be implemented by executing a plurality of procedures. The plurality of procedures include the first procedure and a second procedure. The first procedure is used to access first data and perform an operation to obtain a first operation result. The second procedure is used to access second data and perform an operation to obtain a second operation result. In some possible implementations, the first procedure may be a process, or may be an execution procedure of another type and/or the second procedure may be a process, or may be an execution procedure of another type. This is not limited herein.

It should be noted that the first data is part of data to be accessed by the first procedure, and the second data is part of data to be accessed by the second procedure. For example, the first procedure needs to access data 1a, data 1b, data 1c, and data d, and the first procedure needs to access data 2a, data 2b, data 2c, and the data d. The first data is the data 1a, the second data is the data 2a, and shared data is the data d. The first data is stored in a first CL (or the first data is not stored in any CL, and when the first data is accessed, the first data may be obtained from the RAM and stored in the first CL). The second data is stored in a second CL (or the second data is not stored in any CL, and when the second data is accessed, the second data may be obtained from the RAM and stored in the second CL). The shared data is stored in a shared CL (or the shared data is not stored in any CL, and when the shared data is accessed, the shared data may be obtained from the RAM and stored in the shared CL).

In this embodiment of this application, after the first procedure ends, to evict the first data accessed only by the first procedure, and retain the shared data that needs to be accessed by both the first procedure and the second procedure, the first CL that stores the first data needs to be marked. Therefore, before the first procedure is executed, the first address range including an address of the first data needs to be first defined. Because the first replacement configuration includes the first address range in which the first data is located, when the first procedure accesses the first data, the address of the first data is obtained, and that the address of the first data belongs to the first address range is determined based on the first replacement configuration. Therefore, the first CL in which the first data is located can be marked based on the first hint mapping table, that is, first hint state information of the first CL is set to the first hint id, and the hint state of the first hint id in the first hint mapping table is collection.

In some possible implementations, the cache management program may obtain a running time period of the first procedure, and write the first replacement configuration into the control circuit before the first procedure runs. In some possible implementations, the cache management program may communicate with the target application, to obtain a procedure currently running in the target application and a procedure that is to run in the target application. This is not limited herein.

For example, as shown in FIG. 2-3, the target application includes the first procedure and the second procedure that are sequentially executed. When the first procedure runs, the first data and the shared data need to be accessed. When the second procedure runs, the second data and the shared data need to be accessed.

As shown in FIG. 2-3, before the first procedure runs, the cache management program may write the first replacement configuration into the control circuit. The first address range in the first replacement configuration includes the address of the first data, but does not include an address of the shared data. Therefore, the control circuit can mark the first CL in which the first data accessed by the first procedure is located, that is, set a value of the first hint state information of the first CL to the first hint id.

In some possible implementations, based on prior knowledge of software design of the target application, content of the shared data, the first data, and the second data is identified in advance in a writing phase of the software design or before the first procedure runs during software running, and the shared data, the first data, and the second data are arranged in different address ranges of the RAM. In some possible implementations, as shown in FIG. 2-4, the first address range includes the first data, but does not include the shared data or the second data. This is not limited herein.

In some possible implementations, the address range is not necessarily used to distinguish between the first data and the second data. For example, as shown in FIG. 3-2, the first address range includes the first data and the second data, but does not include the shared data. This is not limited herein.

302: During the running of the first procedure, the control circuit receives a first access request sent by the target application for the first data, and accesses the first data from the first CL.

Refer to step 202. Details are not described herein again.

303: The control circuit accesses the first data from the first CL based on the first access request.

Refer to step 203. Details are not described herein again.

304: If the address of the first data belongs to the first address range, the control circuit sets the first hint state information to the first hint id.

In some possible implementations, each CL in a cache carries corresponding tag information, and the tag information further includes hint state information of the CL. This is not limited herein.

In some possible implementations, a value of hint state information carried in a CL may be a hint id or unconfigured, the hint id is used to determine a mapped hint state based on a hint mapping table, and a hint state is collection or eviction. For example, when the first data is accessed from the first CL, the control circuit determines that the address of the first data in the first CL belongs to the first address range, and the control circuit sets the first hint state information carried in the first CL to the first hint id, where the first hint id is a hint id whose mapped hint state is collection in the first hint mapping table, so that the first CL is marked.

It should be noted that the control circuit needs to set the first hint state information carried in the first CL to be the hint id whose mapped hint state is collection in the first hint mapping table, and therefore the control circuit also needs to determine that the hint id whose mapped hint state is collection exists in the first hint mapping table.

For example, during the running of the first procedure, a value of the first hint state information carried in the first CL is 0, namely, be unconfigured. Because the address of the first data belongs to the first address range, and the mapped hint state of the first hint id in the first hint mapping table is collection, the control circuit may set the first hint state information carried in the first CL to be 1, namely, the first hint id, where the mapped hint state of the first hint id in the first hint mapping table is collection, so that the first CL is marked, that is, the first data that needs to be evicted in a next procedure and is in the first CL is collected.

305: During the running of the first procedure, the control circuit receives an access request sent by the target application for the shared data, and accesses the shared data from the shared CL, where the shared data is data accessed by both the first procedure and the second procedure.

Refer to step 205. Details are not described herein again.

306: If the address of the shared data does not belong to the first address range, the control circuit sets shared hint state information carried in the shared CL to unconfigured.

Refer to step 206. Details are not described herein again.

307: Before the second procedure runs, the cache management program writes a second replacement configuration into the control circuit, where the second replacement configuration includes a second hint mapping table, and the second hint mapping table includes the hint id and a mapped hint state.

In this embodiment of this application, the cache management program may first obtain a running time period of the second procedure, and write the second replacement configuration into the control circuit before the second procedure runs.

In some possible implementations, the second procedure may run immediately after the first procedure ends. In some possible implementations, before the second procedure runs, the cache management program may modify the first replacement configuration to the second replacement configuration. The second replacement configuration includes the second hint mapping table. Compared with that in the first hint mapping table, a mapped hint state of the first hint id in the second hint mapping table is eviction. Therefore, a hint state corresponding to the first CL is eviction, and the control circuit can quickly replace the data in the first CL when the second procedure runs.

For example, the second hint mapping table is shown in Table 7, and the first hint id=1. In the second mapping table, a mapped hint state of the first hint id of value 1 is eviction. The value of the first hint state information carried in the first CL is 1, the mapped hint state in the first hint mapping table is collection, and the mapped hint state in the second hint mapping table is changed to eviction.

**Table 7**

| | Hint id | Hint state |
|---|---|---|
| First hint id | 1 | Eviction |

308: During the running of the second procedure, the control circuit receives a second access request sent by the target application for the second data.

Refer to step 208. Details are not described herein again.

309: If a cache (cache) miss occurs for the second data, the control circuit determines a plurality of CLs to be replaced in the cache, where the plurality of CLs include the first CL.

Refer to step 209. Details are not described herein again.

310: If the first hint state information carried in the first CL among the plurality of CLs is the first hint id, and the mapped hint state of the first hint id in the second hint mapping table is eviction, then the control circuit replaces the first data in the first CL with the second data and accesses the second data in the first CL.

Refer to step 210. Details are not described herein again.

The cache has a small capacity and is expensive. By reducing a quantity of hint ids, a capacity required by the first hint mapping table is reduced, a capacity of the first replacement configuration is reduced, and therefore a storage capacity requirement of the cache is reduced. This can also replace data in a CL in which data accessed by a previous procedure is located, and implement a balance between performance and costs.

Based on the foregoing steps 301 to 310, different mapped hint states of one hint id may be reused to obtain different hint mapping tables and corresponding replacement configurations, and different replacement configurations further include different address ranges. Different replacement configurations are used in different procedures, so that different CLs can be marked or data in different CLs can be replaced in different procedures. The following provides descriptions by using an example.

For example, as shown in FIG. 3-3, a target application includes a plurality of procedures, and the plurality of procedures include a procedure 1, a procedure 2, a procedure 3, and a procedure 4 that sequentially run. The procedure 1 needs to access data 1 and shared data, the procedure 2 needs to access data 2 and the shared data, the procedure 3 needs to access data 3 and the shared data, and the procedure 4 needs to access data 4 and the shared data.

Before the procedure 1 runs, a cache management program writes a replacement configuration 1 into a control circuit, where the replacement configuration 1 includes an address range 1 and a hint mapping table 1. The address range 1 includes an address of the data 1 but does not include an address of the shared data. The hint mapping table 1 is shown in Table 6.

During the running of the procedure 1, when the data 1 is accessed from a CL 1, the address of the data 1 in the CL 1 belongs to the address range 1, and a mapped hint state of a first hint id in the hint mapping table 1 is collection. Therefore, a value of hint state information 1 carried in the CL 1 may be set to be 1, namely, the first hint id. However, the address of the shared data is not in the address range 1, and therefore no processing is performed in the shared CL in which the shared data is located. A value of the shared hint state information of the shared CL is still 0, that is, the corresponding hint state is unconfigured. Therefore, the control circuit marks the CL 1, but does not mark the shared CL.

After the procedure 1 ends and before the procedure 2 runs, the cache management program writes a replacement configuration 2 into the control circuit, to replace the replacement configuration 1. The replacement configuration 2 includes a hint mapping table 2. The hint mapping table 2 is shown in Table 7.

During the running of the procedure 2, when a plurality of CLs to be replaced are determined, the plurality of CLs to be replaced include the CL 1 and the shared CL. The value of the hint state information 1 carried in the CL 1 is 1, namely, the first hint id, and a mapped hint state in the hint mapping table 2 is eviction. The value of the shared hint state information of the shared CL is 0, that is, the corresponding hint state is unconfigured. Therefore, the control circuit can preferentially replace the data in the CL 1 instead of preferentially replace the data in the shared CL.

After the procedure 2 ends and before the procedure 3 runs, the cache management program writes a replacement configuration 3 into the control circuit, to replace the replacement configuration 2. The replacement configuration 3 includes an address range 3 and a hint mapping table 3. The address range 3 includes an address of the data 3 but does not include the address of the shared data. The hint mapping table 3 is shown in Table 6.

During the running of the procedure 3, when the data 3 is accessed from a CL 3, the address of the data 3 in the CL 3 belongs to the address range 3, and a mapped hint state of the third hint id in the hint mapping table 3 is collection. Therefore, a value of hint state information 3 carried in the CL 3 may be set to be 1, namely, the first hint id. However, the address of the shared data is not in the address range 3, and therefore no processing is performed in the shared CL in which the shared data is located. The value of the shared hint state information of the shared CL is still 0, that is, the corresponding hint state is unconfigured. Therefore, the control circuit marks the CL 3, but does not mark the shared CL.

After the procedure 3 ends and before the procedure 4 runs, the cache management program writes a replacement configuration 4 into the control circuit, to replace the replacement configuration 3. The replacement configuration 4 includes a hint mapping table 4. The hint mapping table 4 is shown in Table 7.

During the running of the procedure 4, when a plurality of CLs to be replaced are determined, the plurality of CLs to be replaced include the CL 4 and the shared CL. The value of the hint state information 4 carried in the CL 4 is 1, namely, the first hint id, and a mapped hint state in the hint mapping table 4 is eviction. The value of the shared hint state information of the shared CL is 0, that is, the corresponding hint state is unconfigured. Therefore, the control circuit can preferentially replace the data in the CL 4 instead of preferentially replace the data in the shared CL.

Compared with that in Embodiment 1, in the technical solution of Embodiment 2, a required storage capacity in the cache is the smallest, and by using the second procedure as an interval procedure, the control circuit has sufficient time to evict the first data accessed by the first procedure, without changing a replacement configuration at an interval between the two procedures. Implementation costs are low, and difficulty is low. In addition, in Embodiment 2, address ranges of data do not need to be distinguished very precisely. For example, the first data and the second data may be arranged in a same address range, and do not need to be arranged in different ranges. Data, in the address range, accessed during the running of the first procedure is naturally identified as the first data, and data, in the address range, accessed during the running of the second procedure is identified as the second data. This can reduce difficulty in modifying software and expand application scenarios.

It should be noted that for brief description, the foregoing method embodiments are represented as a series of actions. However, a person skilled in the art should appreciate that this application is not limited to the described order of the actions, because according to this application, some steps may be performed in other orders or simultaneously. A person skilled in the art should also appreciate that all the embodiments described in the specification are preferred embodiments, and the related actions and modules are not necessarily mandatory to this application.

To better implement the solutions of embodiments of this application, a related apparatus for implementing the solutions is further provided below.

FIG. 4 shows a processor 400 according to an embodiment of this application. The processor 400 may include:
a receiving module 401, configured to: before a second procedure runs, receive a second hint mapping table, where the second hint mapping table includes a hint id and a mapped hint state, and the second procedure is a procedure of a target application; and the receiving module 401 is further configured to: during the running of the second procedure, receive a second access request sent by the target application for second data; and a processing module 402, configured to: if a cache (cache) miss occurs for the second data, determine a plurality of CLs to be replaced in the cache, where the plurality of CLs include a first CL; the processing module 402 is further configured to: if first hint state information carried in the first CL among the plurality of CLs is a first hint id, and a mapped hint state of the first hint id in the second hint mapping table is eviction, replace first data in the first CL with the second data, where the first data is data accessed by a first procedure, and the first procedure is a procedure preceding the second procedure in the target application; and the processing module 402 is further configured to access the second data from the first CL.

In some possible implementations, the receiving module 401 is further configured to: before the first procedure runs, receive a first replacement configuration, where the first replacement configuration includes a first address range and a first hint mapping table, the first hint mapping table includes the hint id and a mapped hint state, and in the first hint mapping table, a mapped hint state of the first hint id is collection; the receiving module 401 is further configured to: during the running of the first procedure, receive a first access request sent by the target application for the first data, and access the first data from the first CL; and the processing module 402 is further configured to: if an address of the first data belongs to the first address range, set the first hint state information to the first hint id.

In some possible implementations, the receiving module 401 is further configured to: during the running of the first procedure, receive an access request sent by the target application for shared data, and access the shared data from a shared CL, where the shared data is data accessed by both the first procedure and the second procedure; and the processing module 402 is further configured to: if an address of the shared data does not belong to the first address range, set shared hint state information carried in the shared CL to unconfigured.

In some possible implementations, the receiving module 401 is specifically configured to: receive a second replacement configuration, where the second replacement configuration includes the second hint mapping table, and the mapped hint state of the first hint id in the second hint mapping table is eviction.

In some possible implementations, the second replacement configuration further includes a second address range, and a mapped hint state of a second hint id in the second hint mapping table is collection; and the receiving module 401 is further configured to: if an address of the second data belongs to the second address range, set the first hint state information carried in the first CL to the second hint id.

It should be noted that because content such as information exchange between the modules/units in the apparatus and the execution processes thereof is based on a same idea as the method embodiment of this application, technical effect of the content is the same as that of the method embodiment of this application. For specific content, refer to the descriptions in the foregoing method embodiment of this application. Details are not described herein again.

An embodiment of this application further provides a computer storage medium. The computer storage medium stores a program. The program is executed to perform some or all of the steps recorded in the method embodiments.

In another possible design, when the processor 400 includes a processing unit and a communication unit, the processing unit may be, for example, a processor, and the communication unit may be, for example, an input/output interface, a pin, or a circuit. The processing unit may execute computer-executable instructions stored in a storage unit, to enable a chip in a terminal to perform the method for sending wireless report information according to any one of the implementations of the first aspect.

The processor mentioned anywhere above may be a general-purpose central processing unit, a microprocessor, an ASIC, or one or more integrated circuits configured to control program execution of the methods.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A cache data replacement method, comprising:
before a second procedure runs, receiving a second hint mapping table, wherein the second hint mapping table comprises a hint id and a mapped hint state, and the second procedure is a procedure of a target application;
during the running of the second procedure, receiving a second access request sent by the target application for the second data;
if a cache (cache) miss occurs for the second data, determining a plurality of CLs to be replaced in the cache, wherein the plurality of CLs comprise a first CL;
if the first hint state information carried in the first CL among the plurality of CLs is a first hint id, and a mapped hint state of the first hint id in the second hint mapping table is eviction, then replacing first data in the first CL with the second data, wherein the first data is data accessed by a first procedure, and the first procedure is a procedure preceding the second procedure in the target application; and
accessing the second data from the first CL.

2. The method according to claim 1, wherein the method further comprises:
before the first procedure runs, receiving a first replacement configuration, wherein the first replacement configuration comprises a first address range and a first hint mapping table, the first hint mapping table comprises the hint id and a mapped hint state, and in the first hint mapping table, a mapped hint state of the first hint id is collection;
during the running of the first procedure, receiving a first access request sent by the target application for the first data, and accessing the first data from the first CL; and
if an address of the first data belongs to the first address range, setting the first hint state information to the first hint id.

3. The method according to claim 2, wherein the method further comprises:
during the running of the first procedure, receiving an access request sent by the target application for the shared data, and accessing the shared data from the shared CL, wherein the shared data is data accessed by both the first procedure and the second procedure; and
if an address of the shared data does not belong to the first address range, setting shared hint state information carried in the shared CL to unconfigured.

4. The method according to claim 2 or 3, wherein a mapped hint state of a hint id other than the first hint id in the first hint mapping table is eviction.

5. The method according to any one of claims 1 to 4, wherein receiving the second hint mapping table comprises:
receiving a second replacement configuration, wherein the second replacement configuration comprises the second hint mapping table, and the mapped hint state of the first hint id in the second hint mapping table is eviction.

6. The method according to claim 5, wherein the second replacement configuration further comprises a second address range, a mapped hint state of a second hint id in the second hint mapping table is collection, and after accessing the second data from the first CL, the method further comprises:
if an address of the second data belongs to the second address range, setting the first hint state information carried in the first CL to the second hint id.

7. The method according to any one of claims 1 to 6, wherein the hint state information is carried in tag information of a CL in which the hint state information is located.

8. A processor, comprising:
a receiving module, configured to: before a second procedure runs, receive a second hint mapping table, wherein the second hint mapping table comprises a hint id and a mapped hint state, and the second procedure is a procedure of a target application; and
the receiving module is further configured to: during the running of the second procedure, receive a second access request sent by the target application for the second data; and
a processing module, configured to: if a cache (cache) miss occurs for the second data, determine a plurality of CLs to be replaced in the cache, wherein the plurality of CLs comprise a first CL;
the processing module is further configured to: if the first hint state information carried in the first CL among the plurality of CLs is a first hint id, and a mapped hint state of the first hint id in the second hint mapping table is eviction, replace first data in the first CL with the second data, wherein the first data is data accessed by a first procedure, and the first procedure is a procedure preceding the second procedure in the target application; and
the processing module is further configured to access the second data from the first CL.

9. The processor according to claim 8, wherein
the receiving module is further configured to: before the first procedure runs, receive a first replacement configuration, wherein the first replacement configuration comprises a first address range and a first hint mapping table, the first hint mapping table comprises the hint id and a mapped hint state, and in the first hint mapping table, a mapped hint state of the first hint id is collection;
the receiving module is further configured to: during the running of the first procedure, receive a first access request sent by the target application for the first data, and access the first data from the first CL; and
the processing module is further configured to: if an address of the first data belongs to the first address range, set the first hint state information to the first hint id.

10. The processor according to claim 9, wherein
the receiving module is further configured to: during the running of the first procedure, receive an access request sent by the target application for the shared data, and access the shared data from the shared CL, wherein the shared data is data accessed by both the first procedure and the second procedure; and
the processing module is further configured to: if an address of the shared data does not belong to the first address range, set shared hint state information carried in the shared CL to unconfigured.

11. The processor according to any one of claims 8 to 10, wherein the receiving module is specifically configured to:
receive a second replacement configuration, wherein the second replacement configuration comprises the second hint mapping table, and the mapped hint state of the first hint id in the second hint mapping table is eviction.

12. The processor according to claim 11, wherein the second replacement configuration further comprises a second address range, and a mapped hint state of a second hint id in the second hint mapping table is collection; and
the receiving module is further configured to: if an address of the second data belongs to the second address range, set the first hint state information carried in the first CL to the second hint id.

13. A computer-readable storage medium, wherein the computer-readable storage medium stores a program, and the program enables a computer device to perform the method according to any one of claims 1 to 7.

14. A computer program product, wherein the computer program product comprises computer-executable instructions, the computer-executable instructions are stored in a computer-readable storage medium, at least one processor of a device reads the computer-executable instructions from the computer-readable storage medium, and the at least one processor executes the computer-executable instructions to enable the device to perform the method according to any one of claims 1 to 7.

15. A communication apparatus, wherein the communication apparatus comprises at least one processor, a memory, and a communication interface;
the at least one processor is coupled to the memory and the communication interface;
the memory is configured to store instructions, the processor is configured to execute the instructions, and the communication interface is configured to communicate, under control of the at least one processor, with another communication apparatus; and
when the instructions are executed by the at least one processor, the at least one processor is enabled to perform the method according to any one of claims 1 to 7.

16. A chip system, wherein the chip system comprises a processor and a memory, the memory and the processor are interconnected through a line, the memory stores instructions, and the processor is configured to perform the method according to any one of claims 1 to 7.
